# EUROPEAN PATENT APPLICATION

(11) **EP 0 754 424 A1**
(43) Date of publication of application: **22.01.1997**
(21) Application number: 95913410.7
(22) Date of filing: 03.04.1995
(51) Int. Cl.: A47G 7/02

(54) **FLOWER VASE**

(30) Priority: 05.04.1994 JP 5376/94 U
(71) Applicant: MATSUMURA KOGEI CO., LTD., Higashiosaka, Osaka 577 (JP)
(72) Inventor: MATSUMURA, Masami, Higashiosaka-shi, Osaka 577 (JP)
(74) Representative: Kahler, Kurt, Dipl.-Ing.
(86) International application number: JP9500640
(87) International publication number: WO9526666

(57) **Abstract**

To obtain a flower vase, which is simple in clearing work after use, and does not impair the environment and which can save resources and is easy to manufacture and inexpensive. A coating layer having gas permeability and poor water permeability is formed by depositing a water soluble resin emulsion to the whole surface of a flower vase body or the whole surface except for a part thereof in a layer or a plurality of layers and drying the resin emulsion, said flower vase body being composed of synthetic resin water absorptive foam to which cut flowers or artificial flowers formed into arbitrary shapes are pricked to be fixed.

## Description

### Technological Field

This invention concerns with vases which are made of water absorbent foam and are used for cut, artificial and dry flowers arrangement.

### Technological Background

In general, flower arrangements using water absorbent foam use basins or vases with open upper part or are wrapped with waterproof sheet. To arrange flowers for reception ball tables, cut flowers are at first fixed to water absorbent foam and then water will be added into a basin. When people visit hospital to see patients and bring flowers, it is common that flowers are stuck into a water absorbent foam which is fixed to the plastic or ceramic vases or the water absorbent foam is wrapped with waterproof sheet when a flower basket is used because they don't know whether there is a vase in a hospital or not.

Many hospitals are having trouble in dealing with accumulated vases and flower baskets once flowers from the visitors died. They sometime throw into the trash bins or just leave them outside, which not only deteriorates environment but also leads to waste of natural resources. And additional costs for vases and flower baskets leads to higher prices. Considering the current situation, the objective of this invention is to provide vase which can be dispose easily after its use and can be manufactured at lower cost without causing environmental deterioration and wasting natural resources.

### Indication of Invention

This invention took following technological measures to accomplish the above-stated objectives. Vases of this invention are made of water absorbent foam which is a kind of synthetic resin. The foam can be molded into any desirable shapes of vases to which cut or artificial flowers are stuck. All surfaces of the vase, except a limited area, are treated with a single or multiple layers of coating. The coating, made from water soluble resin called "emulsion", will become waterproof and will let air ventilate when it dried. Synthetic resin, water absorbent foams, are currently marketed as "Aqua" (trademark) or "Oasis" and are made from phenol resin foamed plastic.

This kind of synthetic resin water absorbent foams are capable of absorbing water as much as 95% to 98% of its volume. Once water soluble resin, emulsion, is coated to the foam, water will be absorbed into the foam itself. On the other hand, a large number of small air baubles are created inside the coating which has capability of air filtering as well as of water resistance.

The water soluble resin, emulsion, can be mixed with coloring to create desirable color. The foam is either soaked in or painted with emulsion. And the vase will be completed.

The thickness of a single or multiple layer coating of emulsion is usually about 0.1 mm to 2.0 mm, depending on the thickness of a single coating or the foam's volume. If the thickness is less than 0.1 mm, that may cause waterproof problem. On the other band, the thickness of more than 2.0 mm may cause cracking. The ideal thickness of the coating will be 0.2 mm to 1.0 mm. As mentioned before, water absorbent foam can hold water as much as 95% to 98% of its volume. Different water pressures, temperatures and humidifies may damage the coating partially or completely. As a result, water will be accumulated in damaged area, which may eventually cause leakage. Because of these problems, it is desirable that "Hotmelt" is applied to the foam (vase itself) as adhesive and then water soluble resin, Emulsion, will be coated over the foam (vase). Hotmelt can be applied either through soaking the foam in the Hotmelt or painting Hotmelt directly on the foam. It will permeate into the foam and will not build up any layer on the foam's surface. Although it is desirable that hotmelt is applied to whole area which are coated with water soluble resin, Emulsion, Hotmelt will firmly bold the foam and the coating together and will prevent leakage even if Hotmelt is applied only to the vase's base and its surrounding area where water pressure is the highest.

It's ideal (desirable) that Hotmelt contains ethylene-vinyl-acetate copolymer resin.

It's desirable that EVA resin amounts to 15% t 65% of total volume of hotmelt. If the amount of EVA resin is less than 15% of the total volume of hotmelt, hotmelt's viscosity decreases and the layer of hotmelt will become thinner. AS a result, hotmelt will lose its usefulness of leakage prevention. If the amount of EVA resin is more than 65% of the total volume of hotmelt, hotmelt's viscosity will be too high and the layer of hotmelt will become too thick. As a result, it may cause cracking and the flowers can not pierce thick layer of hotmelt.

It's desirable that hotmelt is melted at the heat of 120C to 200C and then is applied to the vase itself.

It's desirable that rest of hotmelt contains ingredients composed mainly of pine resin.

This invention finds it desirable that the above-mentioned vase has one or several holes of appropriate depths in the top surface or upper part of the vase.

This invention finds it desirable that a sheet is applied to the surface of coating in the base area of the above-mentioned vase.

This invention finds it desirable that the above-mentioned sheet has dehumidifying capacity.

This invention finds it desirable that waterproof cloth with air filtering capability is attached to both sides of coating's surfaces in the bottom part of the above-mentioned vase.

This invention finds it desirable that more than three leges are attached to vase's bottom.

This invention finds it desirable that the coating should give of an appearance of unglazed ceramic, metal or porcelain.

According to this invention, the main part of the vase are made of synthetic water absorbent foam. The surface of the vase is treated with coating which is waterproof and has air filtering capability. Because coated vase's surface is very hard, the vase hardly looses its shape and functions properly as a flower vase and rarely cracks. The flower can be arranged by sticking flowers directly into the vase. At the time of adding water into the vase, the water will be absorbed from vase's uncoated area. The water can be absorbed in a short time because the air entrapped inside the vase (including the remaining gas generated at the manufacturing process) can escape easily through the waterproof and air filtering coating. And cutting flowers can be pierced directly into the coated vase's surface. Due to vase's waterproof capability, water will not ooze out through the coating and will not stain the surrounding are even if the vase is filled with water. Ideally, hotmelt should be patched at least to the vase s bases area and then the coating should be done. The hotmelt should contains EVA resin which counts to 15% to 65% of the hotmelt's total volume. The other ingredients of the hotmelt is composed mainly of pine resin. Hotmelt, melted at the temperature of 120C to 200C, is pasted, at least, to the vase's bottom area, which will drastically prevent leakage caused by coating's peeling off the foam.

At the time of adding water to the vase with holes at its top or upper part, the air inside the vase can escape quickly with holding vase's holed part upward. And the water can be absorbed in a short time with holding vase's holed part downward.

If a sheet is attached or pasted to the coated base's surface of the above-mentioned vase, leakage can be prevented even if the coating was damaged by foreign particles on the table's surface. The sheet with dehumidifying capacity will also prevent dew consolidation caused by accumulation of moisture in the air.

If the upper or lower surface of the coated base of the above-mentioned vase were covered with waterproof and air filtering cloth, waterproof capability of the vase's base area where most of water are accumulated will increase with slowing down release of air inside the vase.

The installation of more than three legs in the base of the vase will create a gap between the vase and the table surfaces, which will prevent above-mentioned due consolidation.

The coating finished in unglazed ceramic, metallic and porcelain style gives this invention an appearance of a real vase.

### Brief Explanation of Drawings

The Figure 1 illustrates a diagonal view of the first application of this invention.

The Figure 2 illustrates a central vertical sector view of the first application.

The Figure 3 illustrates a front view of the second application of this invention.

The Figure 4 illustrates a diagonal view of the third application of this invention.

The Figure 5 illustrates a diagonal view of the fourth application of this invention.

The Figure 6 illustrates a front view of the fifth application of this invention.

The Figure 7 illustrates front view of the fifth application of this invention.

The Figure 8 illustrates a central vertical sector view of the seventh application.

The Figure 9 illustrates a central vertical sector view of the eighth application.

The Figure 10 illustrates a central vertical sector view of the ninth application.

### The Best Form for Application of This Invention

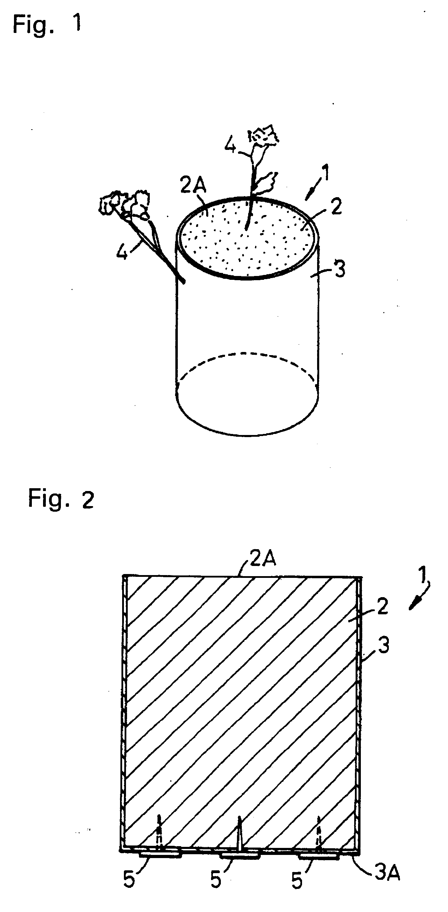

The following explains applied models of this invention, using the figures. The Figure 1 indicates the first application. The vase is composed of main cylindrical part 2 and unglazed ceramic style coating 3 which covers surface of the vase except the vase's upper part 2A. The above-mentioned vase is made of water absorbent foam using phenol resin foamed plastic. Cut flowers 4 can be arranged directly into the foam. The above-mentioned coating 3 is made from water soluble resin, emulsion such as polyester hydrate which has waterproof and air filtering capability when it is applied and dried. The water soluble resin emulsion can be applied through either soaking the vase 2 into emulsion or painting emulsion on the vase. A single or a few layers of coating is done over the vase's outer circumference and base (the base may have a few layer of coating). Once the coating is applied and dried, it will become waterproof and will let air ventilate freely. The appearance of hard and unglazed-style coated container is very similar to the real unglazed vase. The texture of the coating may be varied, depending on the choice of color mixing, such as metallic-like bronze or ceramic besides unglazed ceramic. The dried coating can be also painted, sprayed or pasted at low temperature with paints or metal, which will bring out a different appearance other than metallic or ceramic styles. As indicated in the Figure 2, attaching more than three legs to the vase's 1 base 3A will create a gap between the vase 1 and the table surfaces. The gap will prevent the due condensation caused by moisture in the atmosphere. In the Figure 2, tacks are used as legs 5. The legs can be made by either attaching small, waterproof and thin plastic plates (disc) or extending the vase's 1 base 3A. There is no danger of water leakage inside the vase 2 through the base 1A of the above-mentioned vase 1. The coated vase 1 can be put on a sheet such as heat absorbent coaster. In the case of the application mentioned above, the water can be absorbed by holding down the upper part 2A of the vase 2. The water will be absorbed by the vase 2 and also air trapped inside the vase 2 will be released through the above-mentioned coating 3. The above-mentioned coating 3 helps the vase 2 absorb the water quickly due to its air filtering capability. If the coating is made from clear lacquer, it will be able to prevent water leakage but the water will not be absorbed because of the trapped air inside the vase's main body 2.

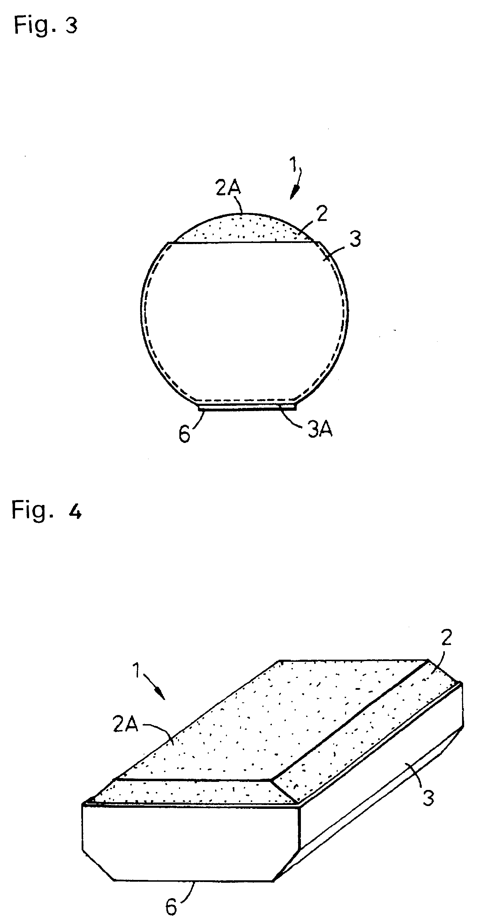

The Figure 3 illustrates the second application of this invention. The vase 1 is a sphere whose bottom part is cut to become the base o the vase. All the surface of the vase 2, except the upper part, is coated 3. The base 3A is pasted with waterproof sheet which are also capable of air filtration. This sheet will prevent leakage if the coating 3 was damaged by the foreign particles on the tables. If the sheet was made of waterproof and air filtering cloth, it will no negatively affect the pace of air released from the vase. In order words, the rate at which the water is absorbed will not decreased. It will also increase a level of waterproof in the base area where the water pressure is the highest. On the other hand, if a coaster is used as a sheet, the above-mentioned due condensation will be prevented because the coaster works as dehumidifier. The materials for the vase 2 and the coating 3 is same as the first application.

In case of the second application, the vase 2 can absorb water as quickly as in the case first application. And similar characteristics (functions) can be expected.

The Figure 4 illustrates the third application of this invention. The only difference in this case is that the vase's shape is octagonal. The same functions as the ones in the second application are expected.

The cut flowers 4 can be arranged not only to the vase's 2 uncoated area 2A but also to the coated area 3. The artificial and dry flowers can be arranged in similar manner also.

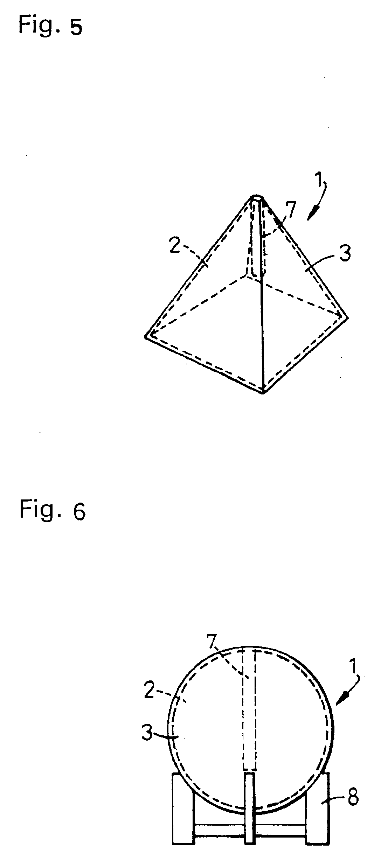

The Figure 5 illustrates the fourth application. The coating 3 is done all over the vase's 2 surface, which is effectively increased the vases' strength. Unglazed style vase has a hole 7 of necessary depth at the top of the vase. The water can be added through the hole. And the artificial and dry flowers can be arranged directly into it without any water.

The Figure 6 illustrates the fifth application. The only difference in this case is that the vase 1 is sphere and is set on the stand 8. In the fourth and fifth application, the air will escape freely through the hole when the water is added.

Even though it is not included in the illustration, the above-mentioned sheet, if necessary, can be attached to the uncoated area which touches walls when vases are hung to walls or pillars.

The above-mentioned waterproof sheet 6 can be pasted to the surface of the coating 3 or be pasted to the vase 2 itself before the coating 3 is applied to the vase 2. After that, emulsion is painted over it. According to the previous applications, the burning of the vase after its use will not generate any poisonous gas, which is safe and hygienic and does not pollute the environment.

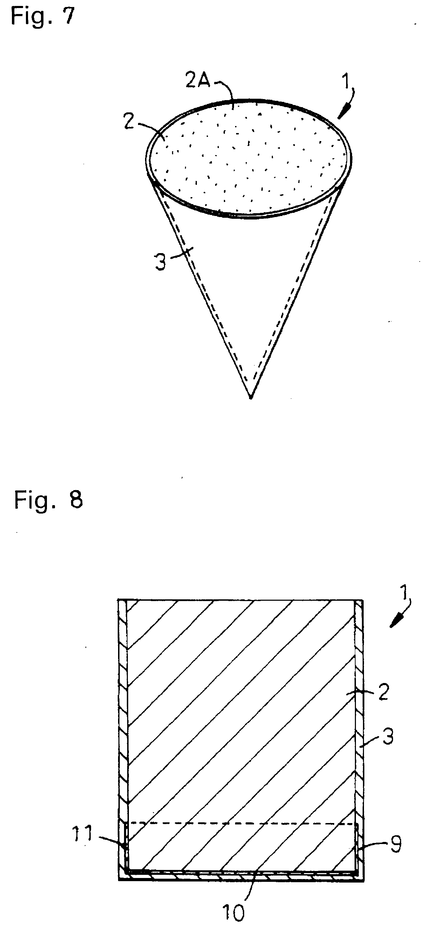

The Figure 7 illustrates the sixth application. The vase 1 is reverse circular cone. The upper part 2A of the vase 2 is exposed and the cone's outer circumference is treated with the coating 3.

This invention is not limited to the applications mentioned above. For example, the vase 2 can take any shapes such as rectangular, cubic, circular cone, prismoid, semisphere, circular truncated cone and a shape cup. The legs mentioned above can be attached, if they are necessary. The leg's form, size and a gap between the vase's base and tables are also chosen at will.

In the first through sixth application in Figure 1 through 7, most of vases made of water absorbent foam, synthetic resin, are treated with water soluble resin, emulsion. As the Figure 8 to Figure 10 indicate, hotmelt 9 is pasted, at least, to the bases 10 of the vases 2 in the seventh through ninth applications. And the coating is applied over the hotmelt. In detail, hotmelt 9 should be composed of EVA resin which equals to 15% to 65% of the hotmelt's total volume. The rest of hotmelt's 9 ingredient includes wax and pine resin. First, the hotmelt is heated and melted at the 120C to 200C and then is applied to the vase's base. The coated hotmelt will prevent water leakage caused by the peeling off of coating from the foam. In Figure 8 to Figure 19, the thickness of the hotmelt 9 is conveniently exaggerated for the explanation but the actual thickness is rather negligible because the hotmelt just permeates into the foam when the foam 2 is soaked in the hotmelt or the hotmelt is painted over the form.

The vase 2 of the seventh application in the Figure 8 is cylindrical like the first application in the Figure 1. The hotmelt was attached to the base 10 and the area near the base 10. In the seventh application, the hotmelt is composed of EVA resin which is equal to 35% of the total volume of the hotmelt. The hotmelt was heated at 180C and then attached to the foam 2. The coating 3 is made from water soluble resins like the ones in the first to the sixth applications.

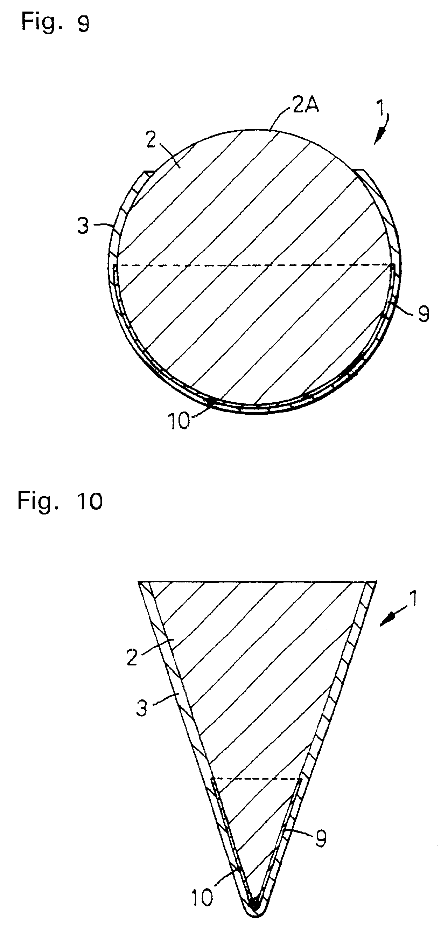

The Figure 9 illustrates the eighth application. The sphere vase 2 has hotmelt attached to the lower half of the base 10. The coating 3 is made from water soluble resins like the ones in the first to the sixth applications.

The Figure 10 illustrates the ninth application. Just like the sixth application in the Figure 7, the vase is reverse circular cone and one third of the lower part of the vase are treated with hotmelt. The size and areas treated with the hotmelt will depend on the water pressure, temperature, humidity and adhesiveness between the vase and the coating. For the technical reason, the hotmelt will be applied to the base and its surrounding area of the vase.

As mentioned above, this invention concerns with water absorbent foam which is made from synthetic resin. The foam is then formed into the different shapes of vases on which cut or artificial flowers are arranged. All surface, excluding a limited area, of this unique vase is applied with a single or multiple layers of the coating of resin, emulsion. Once the coating dries up, it will become waterproof and will let air filter freely. Due to those characteristics of the coating, above-mentioned foam's ability to absorb water will not be compromised. And hardy coating also prevent the vase from cracking and losing its shape. It also prevent the water leakage which may stain or wet tables. The foam not only is very useful as a vase for the cut flowers but also is dispose easily. For example, it can be thrown into trash can after being cut into pieces with knife or be burned without causing any environmental damages. The vase can be manufactured, using less plastic foam as material and saving the natural resources at the same time. The products are marketed at lower prices due to lower production cost. After water is added to the vase, the coated surface can be painted or sprayed with aqueous or oil paints. Metal which are heated at low temperature can also be applied to the vase. It will be possible for the vase to be color-coordinated with the interior or flowers.

It is very unique that the vase in this invention has a hole of necessary depth at vase's top or upper area This feature will make water absorption and air filtration easy and take less time to absorb water. A sheet attached to the surface of the coated base of the above mentioned vase will prevent the water leakage when the coating was damaged by the foreign particles on the tables. If the coaster was damaged by the foreign particles on the tables. If the coaster with humidifying capability was used as a sheet, it also prevent due condensation caused by the moisture in the air.

The waterproof cloth on the upper or lower surface of the coated base of the vase will let the air escape quickly and improve the effectiveness of waterproof of the base where most of the water will be accumulated.

With more than three leges in the vase's base, a gap will be created between the vase and the table's surface ad will prevent due condensation mentioned above.

The vase's appearance will be varied, such as unglazed ceramic, metallic bronze or porcelain, depending on the choice of coloring which is mixed with resin emulsion. Beautiful looks of this invention's container gives an impression of the real vase. Once the coated surface is dried up, the vase then will be painted, sprayed, pasted or done low-beat treatment with paints or metal, which will create better appearances such as metallic bronze, porcelain or ceramic except unglazed one.

It is ideal that hotmelt is attached, at least, to the base of the vase and then the coating is applied. In detail, the hotmelt contains EVA resin which amounts to 15% to 65% of hotmelt's total volume. The rest of hotmelt is composed of wax and pine resin. At first the hotmelt is heated at 120C to will be done over it. This will drastically prevent the water leakage caused by peeling off the coating from the foam.

### Feasibility of Industrial Use

With the use of water absorbent foam made from synthetic resin, this invention's vase will not need water basin, waterproof sheet or flower basket. This will be ideal for industrial use as handy, simple vase.

### Summary Statement

### Summary

### Objective

To create a vase which is manufactured easily at lower cost. It also saves natural resources without damaging environment and is deposed easily after its use.

### Composition

The vase, taking a variety of shapes, is made from water absorbent foam of synthetic resin. The cut and artificial flowers are fixed to it for the flower arrangement. All of the vase's surface, except a limited area, is treated with a single or multiple layers of coating made of water soluble resin, emulsion. Once the coating is dried, it will become waterproof and will let air filter easily.

## Claims

1. The unique vase, taking a variety of desirable shapes, is made of water absorbent foam of synthetic resin. The cut or artificial flowers are directly fixed to it for the flower arrangement. The vase's surface, except a limited area, is coated by a single or multiple layers of water soluble resin, emulsion. The dried coating becomes waterproof and will let air ventilated freely.

2. The coloring materials are mixed into emulsion of which the coating for the vase in Claim 1 is made.

3. The hotmelt is attached, at least, to the base of the vase mentioned in Claim 1, following by the coating process.

4. The hotmelt in the vase mentioned in Claim 3 contains EVA resin.

5. The amount of EVS resin should be 15% to 65% of hotmelt's total volume in case of the vase mentioned in Claim 4.

6. The hotmelt is heated at 120C to 200C and then applied to the base of the vase mentioned in Claim 3.

7. The hotmelt's other ingredients include mixture of wax and pine resin in case of the vase mentioned in Claim 3.

8. The vase has a hole of necessary depth at its top or upper part in case of the vase in Claim 1.

9. The unique vase whose coated base is covered with a sheet in case of the vase in Claim 1.

10. The sheet is waterproof in case of the vase in Claim 9.

11. The cloth which is waterproof and is capable of air filtration is attached to vase's coated base in case of the vase in Claim 1.

12. More than three legs are fixed at the vase's base in case of the vase in Claim 1.

13. The coating has an appearance of unglazed ceramic, metallic and porcelain in case of the vase in Claim 1.
